# EUROPEAN PATENT APPLICATION

(11) **EP 1 835 700 A1**
(43) Date of publication of application: **19.09.2007**
(21) Application number: 04802550.6
(22) Date of filing: 28.12.2004
(51) Int. Cl.: H04L 29/10

(54) **A METHOD AND A DEVICE FOR ENCAPSULATING THE INFORMATION TWICE INSIDE THE COMMUNICATION DEVICE**

(71) Applicant: ZTE Corporation, 518057 Shenzhen City, Guandong Province (CN); Ji, Lin, Nanshan Dist. Shenzhen Guangdong 518057 (CN)
(72) Inventor: JI, Lin, ZTE Plaza, Keji Road South, Shenzhen, Guangdong 518057 (CN)
(74) Representative: Klein, Thomas
(86) International application number: PCT/CN2004/001538
(87) International publication number: WO 2006/069473

(57) **Abstract**

The present invention mainly relates to a method and an apparatus for packaging management and control information in a network communication apparatus. In the present invention, through initializing the FPGA, its two ends provide a standard MII interface and a standard UTOPIA interface respectively, thereby achieving the interface connection between an ATM switching part and an ARM processor; the AAL5PDU data packet is twice packaged in Ethernet format, namely, marking the AAL5 PDU data packets using the VLAN label in an Ethernet frame; and communicating the in-band network management data to a master control CPU through the MII interface. The present invention adopts an ARM processor of high performance and low cost as a management core, only little necessary interface conversion is conducted between a switching chip and the processor, and most of protocol processing will be undertaken by the CPU, thereby the present invention has advantages such as low cost, high efficiency, fine flexibility and easy realization.

## Description

### Field of the Invention

The present invention relates to a method and an apparatus for packaging information in the communication field, and specifically, relates to a method and an apparatus for packaging management and control information inside a communication apparatus.

### Background Art

Nowadays, in-band management is a necessary function in a network communication apparatus. If the network communication apparatus uses ATM (Asynchronous Transfer Mode) as a switching core, then a SAR (segmentation and reassembly) function in the ATM adaptation layer will certainly be used when the in-band network management data are processed, namely, the data (cell format) which are sent from a network management center are converted into the Ethernet or IP data packet through reassembling, and after receiving the data packet, a processor processes it correspondingly; as for the data packet which is sent from the processor and relates to in-band network management, then the above inverse process should be undergone through.

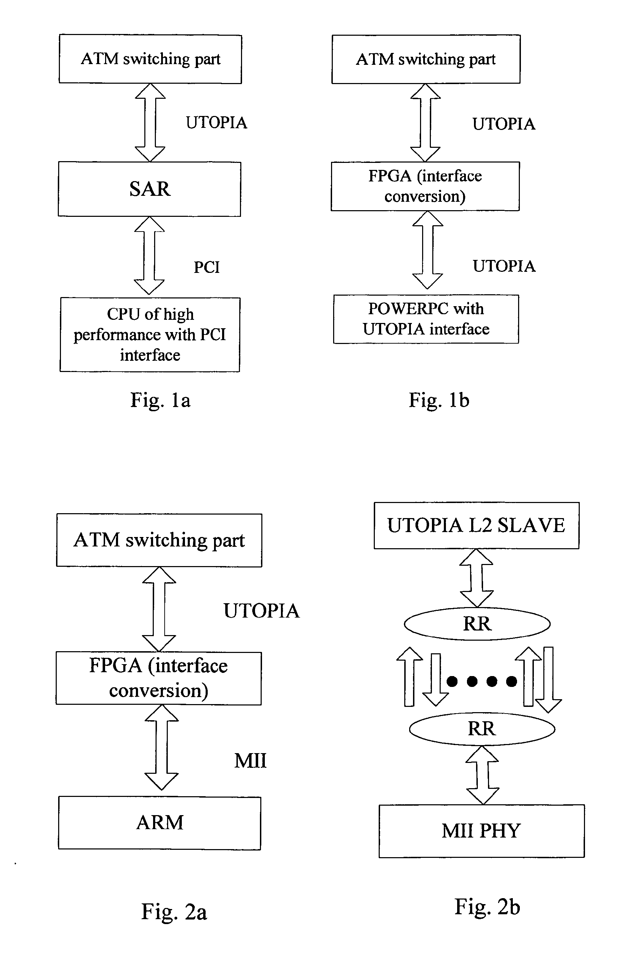

The most common design solution is to add a SAR part for special SAR processing between the processor and the ATM switching part, but the SAR part usually brings so high cost that the system can hardly bear it, and also, besides usually providing a UTOPIA (Universal Test and Operations Phy Interface for ATM) interface at the ATM switching part side, the SAR part only provides a PCI (Peripheral Component Interconnect) interface at the management side, therefore, the processor is required to have a PCI interface, then the cost of the system is further added virtually, and the difficulty in debugging is added too. As illustrated in figure 1a, it is a schematic view in prior art illustrating the adoption of a special SAR part, wherein a standard UTOPIA interface is adopted between the ATM switching part and the SAR part for communication, and a PCI interface is adopted between the SAR part and the CPU for communication.

Another design solution is to adopt a processor with part of the ATM function directly, such as the POWERPC series of MOTOROLA. But the solution, on the one hand, always has a cost problem, because such a processor is very expensive, in addition, it may need to realize the conversion of the UTOPIA interface, rendering the price higher; on the other hand, the microcode part inside the processor needs to be debugged carefully, thereby meeting the basic requirement of efficiency, so the problem of inconvenient design also exists. As illustrated in figure 1b, it is a schematic view illustrating the adoption of the CPU with the ATM function in prior art, wherein a ATM switching part and a piece of FPGA (Field Programmable Gate Array) are connected together through a UTOPIA interface, and necessary interface conversion is implemented inside the FPGA so that the UTOPIA interface can connect the CPU with part of the ATM function.

Currently, lots of universal processors in the market have a higher processing performance while the prices thereof are lower, but they do not have the PCI interface or the UTOPIA interface because of its universality, but only have a common DMA (Direct Memory Access) data transmission interface or a MII (Media Independent Interface) interface, such as the processor of the ARM series. If the processor of this type is used inside the network communication apparatus, although a hardware logic having simultaneously the SAR function and the protocol processing can be added between the MII interface of the processor and the UTOPIA interface of the ATM switching part, in order to achieve the in-band path connection manner of multiple packaging formats, the hardware logic needs to achieve multiple packaging protocols and transferring protocols, then the achieved hardware logic is very complex, and the cost is higher, which offsets the low cost benefit of the universal processor.

### Summary

The present invention aims to provide a method and an apparatus for twice packaging management and control information in a network communication apparatus, and the method and the apparatus are cost-effective and are especially adapted to a network communication apparatus with the ATM as a core.

In order to achieve the above purposes, the present invention provides a method for twice packaging information in a communication apparatus, and the method adopts the FPGA to achieve the interface conversion connection between the ATM switching part and the ARM processor; marks various AAL (ATM adaptation layer ATM) 5 PDU (Protocol Data Unit) data packets using the VLAN (Virtual Local Area Network) label in an Ethernet frame, and then twice packages them; and communicates the in-band network management data to the ARM processor by the MII interface.

On the one hand, the above method according to the present invention comprises the following steps: step 1, initializing the FPGA such that the two ends of the FPGA provide a standard MII interface and a standard UTOPIA interface respectively, and two-way connections between the MII interface and the ARM processor and between the UTOPIA interface and the ATM switching part are achieved; step 2, inside the FPGA, achieving a one-to-one mapping between the logic path PVC (Permanent Virtual Circuit) of the ATM and the VLAN label in the head of the Ethernet frame; step3, as for the cell which is switched to the FPGA from the ATM switching part through the UTOPIA interface, conducting the following operations: stripping the cell headers and reassembling them as the AAL5 CPCS (Common Part Convergence Sublayer)-PDU, packaging the Ethernet header outside the AAL5 CPCS-PDU, marking corresponding VLAN label according to the VPI (Virtual Path Identifier)/VCI (Virtual Channel Identifier), then sending the Ethernet header to the ARM processor by using the MII interface.

According to the above method of the present invention, in said step 3, for the cell switched to the FPGA from the ATM switching part, conducting the following operations: looking up the mapping table according to the VPI/VCI in the cell, if no matched term of the table is found in the table, then discarding the cell; if a matched term of the table is found in the table, then stripping the cell header, reassembling it as the AAL5 CPCS (Common Part Convergence Sublayer)-PDU, according to the corresponding VLAN label in the mapping table entering into a dedicated queue where the VLAN label is, and when the queue receives an integrated CPCS-PDU, packaging it in Ethernet format, and then sending it to the ARM processor through the MII interface.

On the other hand, the above method according to the present invention comprises the following steps: step 1, initializing the FPGA such that the two ends of the FPGA provide the standard MII interface and the UTOPIA interface respectively, and two-way connections between the MII interface and the ARM processor and between the UTOPIA interface and the ATM switching part are achieved; step 2, inside the FPGA, achieving the one-to-one mapping between the logic path PVC (Permanent Virtual Circuit) of the ATM and the VLAN label in the head of the Ethernet frame; step3, as for the data marked with the VLAN label by the ARM processor and entering into the FPGA from the MII interface in the ARM processor, packaging the data in AAL5 format, then packaging the data into the Ethernet frame and marking them with the VLAN label, then conducting the following operations inside the FPGA: stripping the Ethernet header, then splitting and filling the obtained CPCS-PDU, packaging the cell header according to the corresponding relationship between the VLAN label and the PVC, then sending it to the ATM switching part through the UTOPIA interface.

According to the above method of the present invention, in the step 3, conducting the following operations inside the FPGA: looking up the mapping table according to the VLAN label, if no matched term of the table is found in the table, then discarding the data; if a matched term of the table is found in the table, then stripping the Ethernet header, splitting and filling a payload part in a unit of 48 bytes, and meanwhile according to the mapping tables of the VLAN label and the PVC, packaging the cell header for the payload part, filling it in the corresponding VPI/VCI, putting it into the special queue, and then sending it to the ATM switching part through the UTOPIA interface.

According to the above method, the queue is scheduled by setting PRI (prior) or scheduled by adopting ROUND ROBIN.

The present invention further provides an apparatus for twice packaging information inside a communication apparatus, and the apparatus includes an ATM switching part, a FPGA and a processor, wherein a two-way connection is implemented between the ATM switching part and the FPGA through a UTOPIA interface, characterized in that the processor is an ARM processor, and the two-way connection is implemented between the FPGA and the ARM processor through a MII interface; inside the FPGA, one-to-one mapping between the logic path PVC of the ATM and the VLAN label at the head of the Ethernet frame can be achieved.

The apparatus according to the present invention, wherein when a cell is switched to the FPGA from the ATM switching part, conducts the following operations to the cell inside the FPGA: looks up a mapping table according to the VPI/VCI inside the cell, if no matched term of the table is found in the table, then discards the cell; if a matched term of the table is found in the table, then strips the cell header, reassembles the AAL5 CPCS-PDU, and according to the corresponding VLAN label in the mapping table, enters into a special queue where the VLAN label is, when the queue receives an integrated CPCS-PDU, packages the CPCS-PDU in Ethernet format, and then sends it to the ARM processor through the MII interface.

The apparatus according to the present invention, wherein when the data enters into the FPGA through the MII interface, before entering into the FPGA, the ARM processor packages the data in AAL5 format, then packages the data in Ethernet format, and marks the MAC address and the VLAN label of the FPGA interface, and inside the FPGA, looks up the mapping table according to the VLAN label, if no matched term of the table is found in the table, then discards the data; if a matched term of the table is found in the table, then strips the Ethernet header, splits and fills the payload part in a unit of 48 bytes, and then according to the mapping table of the VLAN label and the PVC, packages the cell header for the payload part, fills in the corresponding VPI/VCI, puts the cell into the special queue, and sends the cell to the said ATM switching part through the UTOPIA interface at the same time.

In the above-mentioned apparatus according to the present invention, the queue is scheduled by setting PRI or scheduled by adopting the ROUND ROBIN.

The ARM processor accomplishes the corresponding process of the packaged data inside the CPCS-PDU, then process of multiple protocol packagings (such as the RFC2684 Bridged packaging or Routed packaging based on LLC SNAP or VC MUX) can be implemented flexibly through a software, thereby realizing multiple packaging functions by using a single and simple physical interface.

The present invention adopts an ARM processor of high performance while low cost as a management core, and only conducts little necessary interface conversion between the switching part and the processor, and most of the protocol processing will be undertaken by the processor, thereby having advantages such as low cost, high efficiency, fine flexibility, and easy realization.

### Brief Description of the Accompanying Drawings

Figure 1 a is a schematic view illustrating the adoption of a special SAR part by prior art;
Figure 1b is a schematic view illustrating a CPU with the ATM function in prior art;
Figure 2a is a structure view illustrating the system of the present invention;
Figure 2b is a view illustrating the inner structure of the FPGA of the present invention;
Figure 3 is a flowchart illustrating the data processing from the ATM switching part to the ARM processor in the present invention; and
Figure 4 is a flowchart illustrating the data processing from the ARM processor to the ATM switching part in the present invention.

### Detailed Description of the Embodiments

The following is a detailed description of the present invention in conjunction with the accompanying drawings and the embodiment thereof.

As illustrated in figure 2a, initialize the FPGA such that the FPGA, according to the ATM forum standard af-phy-0039, achieve the connection between an interface (the UTOPIA L2 SLAVE illustrated in the figure) of a UTOPIA L2 slave apparatus and an ATM switching part at the ATM side; and at the ARM processor side, the connection between a MII interface and the ARM processor is achieved according to the standard 802.3.

As illustrated in figure 2b, inside the FPGA, a mapping table is achieved for the mapping between the VLAN label of an Ethernet data packet at the ARM side and the PVC of the cell at the ATM side, so as to achieve an isolated two-way connection (management path). According to the actual number of the actual management paths to be ended and processed, multiple queues are achieved at the MII side and at the UTOPIA side, and the queues at the two sides should be corresponding one by one, and the queues at the MII side is confirmed only by the VLAN label, as what is stored in the queues are all management data, so the equal weight polling algorithm of the ROUND ROBIN is adopted, but according to the actual needs, the weight of a queue can also be adjusted.

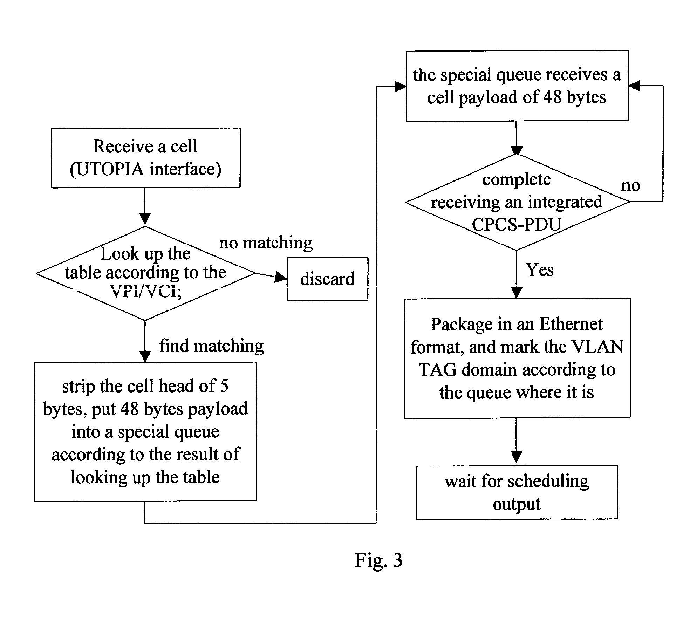

As illustrated in Figure 3a and figure 3b, after a network management message being segmented enters into the network communication apparatus in cell format, then it is switched inside the ATM switching part to an interface connected with the FPGA, and the FPGA, after receiving the cell through the UTOPIA interface, FPGA looks up the mapping table according to the VPI/VCI in the cell, if no matched term of the table is found in the table, the FPGA discards the cell; if a matched term of the table is found in the table, it strips the cell header, and enters into a special queue to which the VLAN label belongs according to the corresponding VLAN label in the mapping table, and when the queue receives an integrated CPCS-PDU, the queue packages it (marking the MAC (Media Access Control) address and the VLAN label of the ARM) in Ethernet format and recalculates the checksum, then waits for scheduling in order to be sent to the ARM processor through the MII interface. When the Ethernet frame reaches the ARM processor, the CPCS-PDU is separated from the Ethernet frame, meanwhile, the packaging format (such as the packaging in Ethernet format) of the management message is confirmed according to the LLC (Logical Link Control) domain of the head, and corresponding processes are implemented according to different packaging formats.

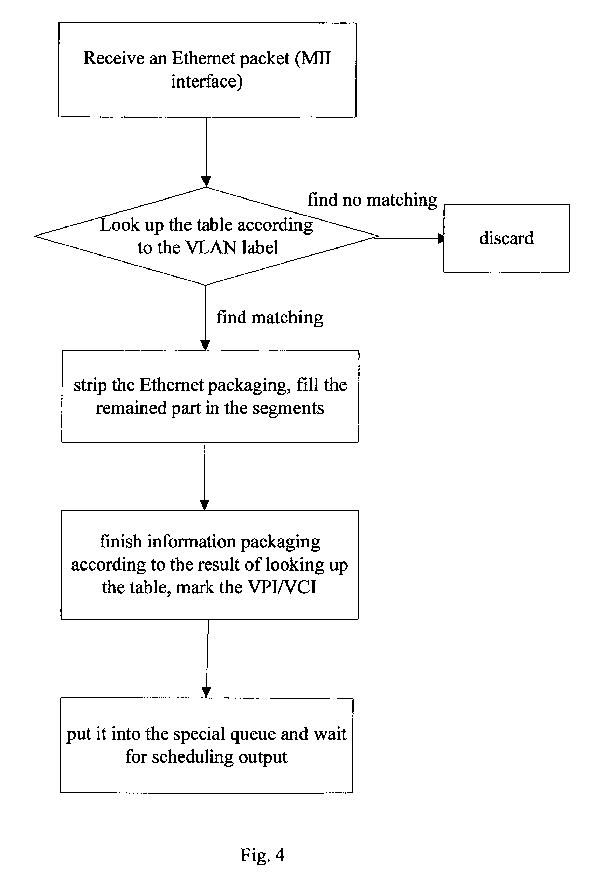

As illustrated in figure 4, as for the management message from the ARM processor, it is first packaged in the ARM processor according to the format corresponding to a network management center, then it is packaged into an Ethernet frame (marking the MAC address and the VLAN label of the ARM, and recalculating the checksum) and sent to the FPGA through the MII interface. After receiving the management message sent from the ARM processor through the MII interface, the FPGA looks up the mapping table according to the VLAN label, if no matched term of the table is found in the table, it discards the message; if a matched term of the table is found in the table, it strips the header of the Ethernet from the message, splits and fills in the payload in a unit of 48 bytes, and then the FPGA, according to the mapping table, adds a cell header into the payload, fills in the corresponding VPI/VCI into the processed payload, then puts it into the special queue, and waits for scheduling so as to be sent it to the ATM switching part through the UTOPIA interface, and then it is switched out from the system finally.

Figure 3a, Figure 3b and Figure 4 only illustrate the general processing flow of the data in two directions, as for the unusual circumstances such as that grouped packets are overtime and the queue overflows, they can be processed according to technique solutions in the prior art.

In the present invention, at a physical exit, the simple ROUND ROBIN is adopted to implement fair scheduling output for the data inside the management path. The PRI can be configured and scheduled for the queue according to needs, in order to ensure the service quality of the data stream of a high PRI. The present solution arranges the works, such as splitting and reassembling which need lots of calculation but should be conducted efficiently, to be completed inside the hardware FPGA, and the corresponded packaging processes are accomplished by an ARM processor, accordingly, the present solution has advantages of being simple, efficient and flexible, and specially has an advantage in cost.

### Industrial applicability

The present invention mainly is used for packaging management and control information in a network communication apparatus. The present invention adopts an ARM processor of high performance and low cost as a management core, and uses a piece of FPGA to realize the interface between a ATM switching part and the ARM processor, twice package AAL5 PDU in Ethernet format and communicates the in-band network manage data to a master control CPU by using a MII interface, thereby most of the protocol processes are undertaken by a processor, and then the present invention has multiple advantages such as low cost, high efficiency, fine flexibility, easy realization.

## Claims

1. A method for twice packaging information inside a communication apparatus, **characterized in** achieving the interface conversion between an ATM switching part and an ARM processor by adopting the FPGA, marking various AAL5 PDU data packets by using the VLAN label inside an Ethernet frame, and communicating in-band network management data to the ARM processor by using a MII interface.

2. The method for twice packaging information inside a communication apparatus according to claim 1, **characterized in** further comprising the following steps:
step 1: initializing the FPGA such that provide a standard MII interface and a UTOPIA interface at the two ends of the FPGA, and achieving a the two-way connections between the MII interface and the ARM processor and between the UTOPIA interface and the ATM switching part;
step 2: inside the FPGA, achieving a one-to-one mapping between a logic path PVC of the ATM and the VLAN label at the head of the Ethernet frame; and
step3: as for a cell which is switched to the FPGA from the ATM switching part through the UTOPIA interface, implementing the following processes: stripping the cell header and reassembling it as the AAL5 CPCS-PDU, packaging an Ethernet header outside the AAL5 CPCS-PDU, marking a corresponding VLAN label according to the VPI /VCI, then sending the Ethernet header to the ARM processor by using the MII interface.

3. The method for twice packaging information inside a communication apparatus according to claim 2, **characterized in that** the step 3 further comprises the following steps: looking up a mapping table according to the VPI/VCI inside the cell, if no matched term of the table is found in the table, then discarding the cell; if a matched term of the table is found in the table, then stripping the cell header, reassembling it as the AAL5 CPCS-PDU, entering into a special queue to which the VLAN label belongs according to the corresponding VLAN label in the mapping table, when a queue receives an integrated CPCS-PDU, conducting packaging for it in Ethernet format, and then sending the packaged CPCS-PDU to the ARM processor through the MII interface.

4. The method for twice packaging information inside a communication apparatus according to claim 1, **characterized in** further comprising the following steps:
step 1: initializing the FPGA such that provide a standard MII interface and a standard UTOPIA interface at the two ends of the FPGA, and achieving two-way connections between the MII interface and the ARM processor and between the UTOPIA interface and the ATM switching part;
step 2: inside the FPGA, achieving a one-to-one mapping between a logic path PVC (Permanent Virtual Circuit) of the ATM and the VLAN label at the head of the Ethernet frame; and
step3: as for the data marked with a VLAN label by the ARM processor and entering into the FPGA through the MII interface, in the ARM processor, packaging the data in AAL5 format, then packaging the data into the Ethernet frame and marking the data with VLAN label, then implementing the following processes in the FPGA: stripping an Ethernet header, then splitting and filling the obtained CPCS-PDU, packaging the cell header according to the corresponding relationship between the VLAN label and the PVC, then sending the packaged cell header to the ATM switching part through the UTOPIA interface.

5. The method for twice packaging information inside a communication apparatus according to claim 4, **characterized in that** in the step 3, the following processes are implemented in the FPGA: looking up the mapping table according to the VLAN label, if no matched term of the table is found in the table, then discarding the data; if the matched term of the table is found in the table, then stripping the Ethernet header, splitting and filling a payload in a unit of 48 bytes, and then according to the mapping table of the VLAN label and the PVC, packing the cell header for the payload, filling it in the corresponding VPI/VCI, putting it into the special queue, and then sending it to the ATM switching part through the UTOPIA interface.

6. The method for twice packaging information inside a communication apparatus according to claim 4 or 5, **characterized in that** scheduling is conducted through setting PRI for the queue.

7. The method for twice packaging information inside a communication apparatus according to claim 4 or 5, **characterized in that** the queue is scheduled by adopting the ROUND ROBIN.

8. An apparatus for twice packaging information inside a communication apparatus, including a ATM switching part, the FPGA and a processor, wherein a two-way connection is implemented between the ATM switching part and the FPGA through the UTOPIA interface, **characterized in that** the processor is an ARM processor, and a two-way connection is implemented between the FPGA and the ARM processor through the MII interface; and inside the FPGA, the AAL 5 PDU is twice packaged in Ethernet format.

9. The apparatus for twice packaging information inside a communication apparatus according to claim 8, **characterized in that** in the FPGA, when switch the cell from the ATM switching part to the FPGA, looking up the mapping table according to the VPI/VCI inside the cell, if no matched term of the table is found in the table, discarding the cell; if the matched term of the table is found in the table, striping the cell header and reassembling the AAL5 CPCS-PDU, according to a corresponding VLAN label in the mapping table, entering into the special queue to which the VLAN label belongs, when receive an integrated CPCS-PDU, the queue packaging it in Ethernet format, and then sending it to the ARM processor through the MII interface.

10. The apparatus for twice packaging information inside a communication apparatus according to claim 8, **characterized in that** inside the ARM processor, firstly, packaging in AAL5 format the data which enter into the FPGA through the MII interface, then packaging the same in Ethernet format, mark the MAC address and the VLAN label of a FPGA interface; inside the FPGA, looking up the mapping table according to the VLAN label, if no matched term of the table is found in the table, discarding the data; if the matched term of the table is found in the table, striping the header of the Ethernet, splitting and filling the payload in a unit of 48 bytes, and then according to the mapping table of the VLAN label and the PVC, packaging the cell header for the payload, filling the corresponding VPI/VCI, and put it into the special queue, then send it to the ATM switching part through the UTOPIA interface.

11. The apparatus for twice packaging information inside a communication apparatus according to claim 9 or 10, **characterized in that** scheduling is conducted by setting PRI for the queue.

12. The apparatus for twice packaging information inside a communication apparatus according to claim 9 or 10, **characterized in that** the queue is scheduled by adopting the ROUND ROBIN.
